# EUROPEAN PATENT SPECIFICATION

(11) **EP 1 807 168 B1**
(45) Date of publication and mention of the grant of the patent: **05.04.2017**
(21) Application number: 05790829.5
(22) Date of filing: 26.08.2005
(51) Int. Cl.: B01D 37/00, B01D 29/09, B01D 29/60, B01D 29/82, B01D 29/84, B01D 25/00, B01D 25/127, B01D 25/28

(54) **HIGH-EFFICIENCY SLURRY FILTRATION METHOD**
HOCHLEISTUNGSVERFAHREN ZUM FILTRIEREN VON AUFSCHLÄMMUNGEN
PROCÉDÉ DE FILTRATION DE BOUILLIE A EFFICACITE ELEVEE

(30) Priority: 13.09.2004 US 609290 P
(43) Date of publication of application: 18.07.2007
(73) Proprietor: FLSmidth A/S, 2500 Valby (DK)
(72) Inventor: Benesi, Steve C., Novato, CA 94947 (US); Costelloe, Patrick J., Albany, CA 94706 (US)
(86) International application number: PCT/US2005/030258
(87) International publication number: WO 2006/031406

(56) References cited:
- WO-A-03/061801
- US-A- 4 116 831
- US-A- 4 477 358
- US-A- 4 997 575
- US-A- 5 133 883
- US-A- 5 292 434
- US-A- 5 540 846
- US-A1- 2004 134 863
- US-B1- 6 280 638
- US-B1- 6 440 316
- US-B1- 6 655 531

## Description

This invention relates to a method for operating a slurry filtration apparatus for optimum efficiencies. More particularly the method provides for efficiencies in energy use, as well as affording optimal separation of liquids and solids.

Slurries of solids and liquids produced in many processes require separation of the liquids and solids to produce a desired product or products; the product may be either or both the liquid or the solid part of the slurry. Such processes include, for example, manufacturing, mining and energy generation, to name a few. Sought-after efficiencies in accomplishing the separation include: (1) the quality of the separated liquid or solid (e.g. the dryness of the solids or the percentage solids, or liquids, obtained); (2) minimizing the amount (quantity of pieces, cost and/or bulk) of equipment used to accomplish the separation; (3) minimizing and/or optimizing the space required to accomplish the separation (in terms of equipment "footprint" or square or cubic footage occupied by the equipment and associated plumbing); (4) minimizing the amount of energy used to accomplish the separation; (5) minimizing the time used to accomplish the separation; (6) maximizing the production of solids and filtered liquid per unit of filter area; (7) minimizing the amount of treatment or washing fluids required to achieve the desired separation; and (8) minimizing waste of process streams. In other words, efficiency in the separation system is thus dependent upon the time and energy taken to accomplish the separation as well as the amount of utilities and space needed for the system and the need for multiple pieces of equipment to accomplish the separation and quality of separated product. The present invention is directed to a system and apparatus for efficiently separating liquids from solids in a slurry stream with a minimum of equipment and energy, and with the use of a limited amount of space and utilities while producing the desired end result of a liquid and/or solid product.

### Description of Related Art

Prior art separating systems have used centrifugal mechanisms for separating liquids and solids followed by rotary, flash, fluid bed, or belt dryers for producing a product.
Others have used diaphragm membrane filters that press liquids from solids followed by drying processes to dry the solids separated thereby. Other filter systems employ a pressure filter which comprises a filter chamber into which a slurry is distributed, and subsequent to the introduction of the slurry, one or more liquids or fluids (including gases) is introduced into the chamber to assist in forcing the separation of the liquids from the solids in the chamber, resulting in a filter cake of desired physical characteristics.

WO03/061801 discloses a pressure-filter along with its peripheral equipment that permit the automatic controlled operation of the filter for extracting liquids from a fluid liquid/solid slurry and for the formation of a substantially dry filter cake. The efficiency of the filter apparatus is increased by the use of hot gas as an material for treating the cake within the filter for extracting the liquids as filtrate. The hot gas may be hot air, hot inert gas, steam, or combinations thereof in controlled sequences. The filter is adapted to be able to operate under vacuum or elevated pressure and at elevated temperatures.

US5540846 discloses an invention which relates to a process for the separation, in particular filtration of liquids and solids from solid-liquid mixtures, such as from a mineral, ore, coal or sludge suspensions of contaminated earth. The processing space of the filtration apparatus is submitted to overpressure and includes a collector container for solid-liquid mixture, a pressure filter, a discharge system and container for condensate and solid matter. The separation or filtration takes place at an overpressure and at an elevated temperature, preferably 40 DEG C. to 300 DEG C., conveniently 60 DEG C. to 200 DEG C., preferably about 150 DEG C. The pressure filter device communicates with a source for a heated medium.

### SUMMARY OF THE INVENTION

The present invention provides a method as set out in claim 1.

In one example, the present invention includes an apparatus and process which may use all or part of the filter apparatus disclosed in U.S. Patents. 5,292,434; 5,462,677; 5,477,891; 5,510,025; 5,573,667; 5,615,713; 6,159,359; 6,491,817 and 6,521,135; and US Patent Published Application 20030127401, all by the present inventor. In addition, some examples of the present invention include elements for conditioning the slurry or components thereof prior to entry into the filter apparatus, and/or within the filter apparatus itself, and the control of gas, fluid and liquid introduction into the filter apparatus to produce a product of desired quality.

In another example, the apparatus and process of present invention further includes conditioning elements of the filter apparatus itself (e. g. the filter medium, or filter plates, or other structural elements), prior to or concurrently with conditioning the slurry itself. The apparatus and process may include a controller or controllers to control the operation of the peripheral equipment, to control the introduction of slurry into the filter apparatus, to control the introduction of conditioning or conditioned air, gases, steam, heat or pressure, into the slurry and/or into the filter apparatus, and to control additional peripheral equipment for processing and/or treatment of the slurry within the chamber, or treatment of the apparatus itself, for the production of both desired liquids and solids from the filter apparatus.

In one example, the present invention comprises methods and apparatus to separate solids and liquids from a slurry (also referred to as de-watering) which results in maximal drying of the solids with (1) lowest energy use; and/or (2) use of a minimum amount of apparatus; and/or (3) use of a minimum amount of space for the apparatus; and/or (4) least amount of time necessary to accomplish the separation; and/or (5) minimizing the amount of treatment or washing fluids required to achieve the desired separation; and/or (6) minimizing waste of process streams. The invention also contemplates any combinations of the foregoing.

In another example, the present invention comprises methods and apparatus to separate solids and liquids from a slurry (also referred to as de-watering) which results in optimal drying of the solids with (1) lowest energy use; and/or (2) use of a minimum amount of apparatus; and/or (3) use of a minimum amount of space for the apparatus; and/or (4) least amount of time necessary to accomplish the separation; and/or (5) minimizing the amount of treatment or washing fluids required to achieve the desired separation; and/or (6) minimizing waste of process streams.. The invention also contemplates any combinations of the foregoing. The foregoing can be accomplished in a variety of ways as set forth in the various examples of the present invention disclosed herein.

### BRIEF DESCRIPTION OF THE DRAWINGS

Fig 1 is a schematic block diagram illustrating operational steps of one embodiment of a method of the present invention;
Fig 2 is a schematic representation of a filter apparatus and peripheral apparatus used to perform the methods of the present invention;
Fig 3 is a perspective view of an embodiment of a filter apparatus of the present invention;
Fig 4 is a schematic representation of various energy-efficient compressor apparatus which comprise one embodiment of the methods of the present invention;
Fig 5 is graph of air pressure versus time, illustrating advantages of one embodiment of apparatus and methods of the present invention;
Fig 6 is a schematic representation of various energy-efficient compressor apparatus, and associated filter apparatus which comprise one embodiment of the methods of the present invention;
Fig 7 is a schematic representation of a multi-module filter apparatus which comprises one embodiment of the apparatus and methods of the present invention; and

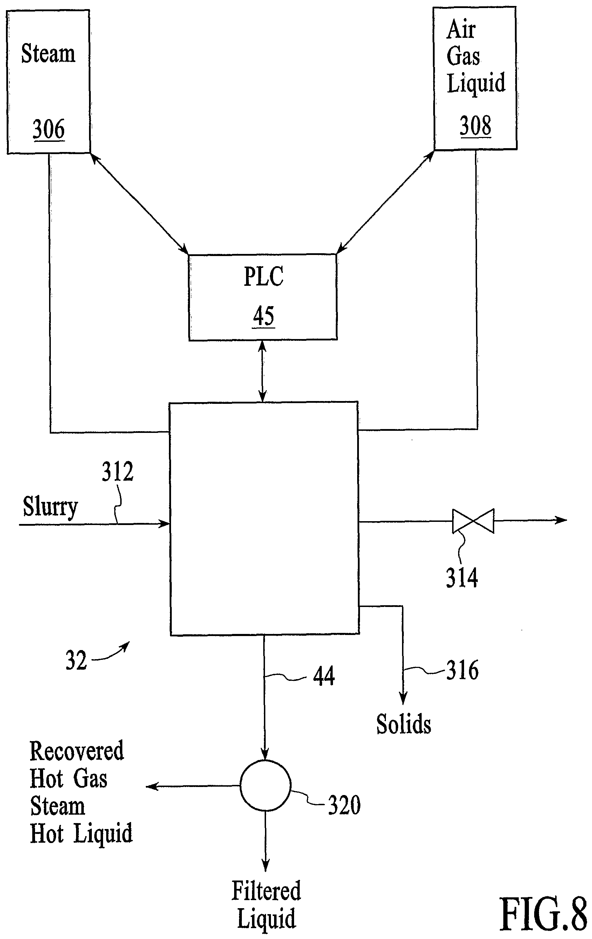

Fig 8 is a schematic representation of filter apparatus and peripheral apparatus which comprise one embodiment of the apparatus and methods of the present invention.

### DETAILED DESCRIPTION OF THE PRESENT INVENTION

### Definitions:

Before describing the present invention in detail, it is to be understood that the invention is not limited to the particularly exemplified apparatus, systems, methods, or processes disclosed herein, which may, of course, vary. It is also to be understood that the terminology used herein is for the purpose of describing particular embodiments of the invention only, and is not intended to limit the scope of the invention in any manner.

All publications, patents and patent applications cited herein, whether *supra* or *infra*, are hereby incorporated by reference in their entirety to the same extent as if each individual publication, patent or patent application was specifically and individually indicated to be incorporated by reference.

It must be noted that, as used in this specification and the appended claims, the singular forms "a," "an" and "the" include the plural unless the content clearly dictates otherwise. Thus, for example, reference to a "controller" includes one, two or more such controllers.

Unless defined otherwise, all technical and scientific terms used herein have the same meaning as commonly understood by one of ordinary skill in the art to which the invention pertains. Although a number of methods and materials similar or equivalent to those described herein can be used in the practice of the present invention, the preferred materials and methods are described herein.

In the application, effective amounts are generally those amounts listed as the ranges or levels of ingredients in the descriptions, which follow hereto. Unless otherwise stated, amounts listed in percentages ("%'s") are in weight percent.

As used herein, unless otherwise clear from the context, the term "slurry" includes a mixture of liquids and solids which is input into the separation apparatus, and also includes fully or partially separated solids and liquids.

The term "psi" refers to absolute pressure.

"Maximal" drying contemplates that essentially all desired liquid has been separated from the solids, given the end or desired use to which the solids and/or liquids is put.

"Optimal" drying contemplates that a desired or target level of liquid has been separated from the solids, given the end or desired use to which the solids and/or liquids is put.

"Elevated" referring to temperature means greater than ambient as compared to the substrate, component or surface to which the temperature refers; and "elevated" referring to a pressure means greater than atmospheric pressure.

"Fluid" is used to mean both a liquid, or a gas, or a combination thereof, unless otherwise clear from the context that the fluid is limited to a liquid, or to a gas.

Slurry means a flowable mixture of solids and liquids, the solids generally insoluble in the liquids at conventional temperatures and pressures. The slurry is further defined as the material which is to be separated into a liquid stream and a solid stream, the latter also known as the filter "cake."

Poiseuille's Law states that the velocity of a liquid flowing through a capillary is directly proportional to the pressure of the liquid and the fourth power of the radius of the capillary, and is inversely proportional to the viscosity of the liquid and the length of the capillary.

It is to be understood that unless otherwise clear from the context, any feature, element, sub-process, condition or parameter described in connection with a particular embodiment of the system, apparatus, process or method is applicable to each and every embodiment of the system, apparatus, process or method described herein.

In one embodiment, the present invention comprises methods and apparatus to separate solids and liquids from a slurry (also referred to as de-watering) which results in maximal drying of the solids with (1) lowest energy use; and/or (2) use of a minimum amount of apparatus; and/or (3) use of a minimum amount of space for the apparatus; and/or (4) least amount of time necessary to accomplish the separation; and/or (5) minimizing the amount of treatment or washing fluids required to achieve the desired separation; and/or (6) minimizing waste of process streams. The invention also contemplates any combinations of the foregoing.

In another embodiment, the present invention comprises methods and apparatus to separate solids and liquids from a slurry (also referred to as de-watering) which results in optimal drying of the solids with (1) lowest energy use; and/or (2) use of a minimum amount of apparatus; and/or (3) use of a minimum amount of space for the apparatus; and/or (4) least amount of time necessary to accomplish the separation; and/or (5) minimizing the amount of treatment or washing fluids required to achieve the desired separation; and/or (6) minimizing waste of process streams.. The invention also contemplates any combinations of the foregoing. The foregoing can be accomplished in a variety of ways as set forth in the various embodiments of the present invention disclosed herein.

Generally, the apparatus of the present invention comprises: (i) a filtration chamber, which is sealable to confine a slurry such that a pressure differential can be applied thereto, (ii) a filter medium within the filtration chamber, (iii) slurry inlet means, (iv) liquid discharge means, (v) solids discharge means, (vi) treatment fluid input means, (vii) treatment fluid input means, (viii) compressor or heat exchanger means for compressing and/or heating the treatment fluid(s), and (ix) system monitoring and controlling means.

The process of the present invention generally comprises the steps of: (i) slurry fill, (ii) application of a pressure differential to the slurry within the filtration chamber, (iii) optionally, application to the filter cake within the chamber of non-condensing gas as a clearing fluid, (iv) optionally, application of steam to heat the filtration chamber, (v) optionally, drying the filter cake with hot air or gas, and (vi) discharging the dried filter cake.

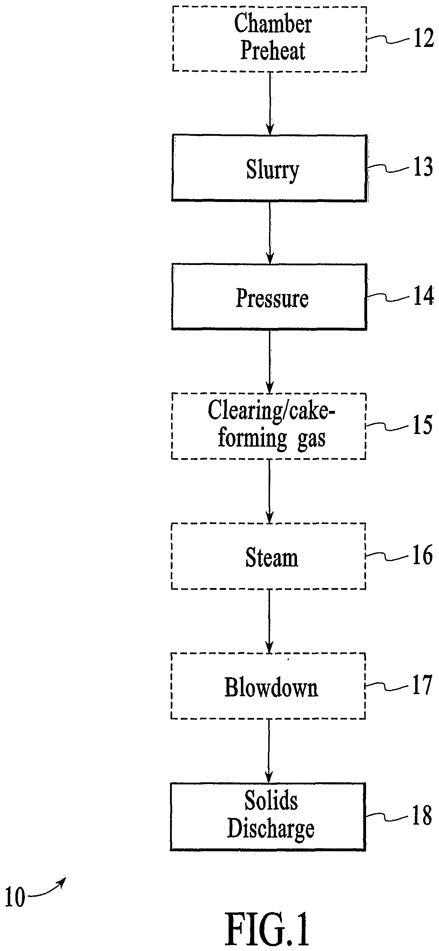

Fig 1 illustrates an overall separation system 10 of the present invention, in terms of process steps, in schematic block diagram form. The process steps of Fig 1 which are illustrated in dashed line blocks are optional steps, as described more fully herein. The first block 12, which is optional, comprises a filtration chamber preheat step. A slurry fill step, shown as block 13, commences the separation process. Following the slurry fill step 13, there is an application of a pressure differential, shown as block 14. The applied pressure differential can comprise a pressure supplied by filling the chamber with slurry, or can comprise an applied fluid, e.g. a gas, introduced into the chamber, or can comprise a mechanical expression, or any combination thereof. "Mechanical expression" as used herein, comprises a squeezing, such as by a flexible or elastomeric component, for example, a diaphragm or bladder. Optional block 15, comprising the step of applying a cake-forming or clearing gas or fluid, and block 16, the step comprising introducing a conditioning gas (especially steam) are next. A chamber blowdown step, comprising applying a de-watering and/or drying gas, is illustrated as optional block 17, and the filtered solids are discharged in the final step at block 18.

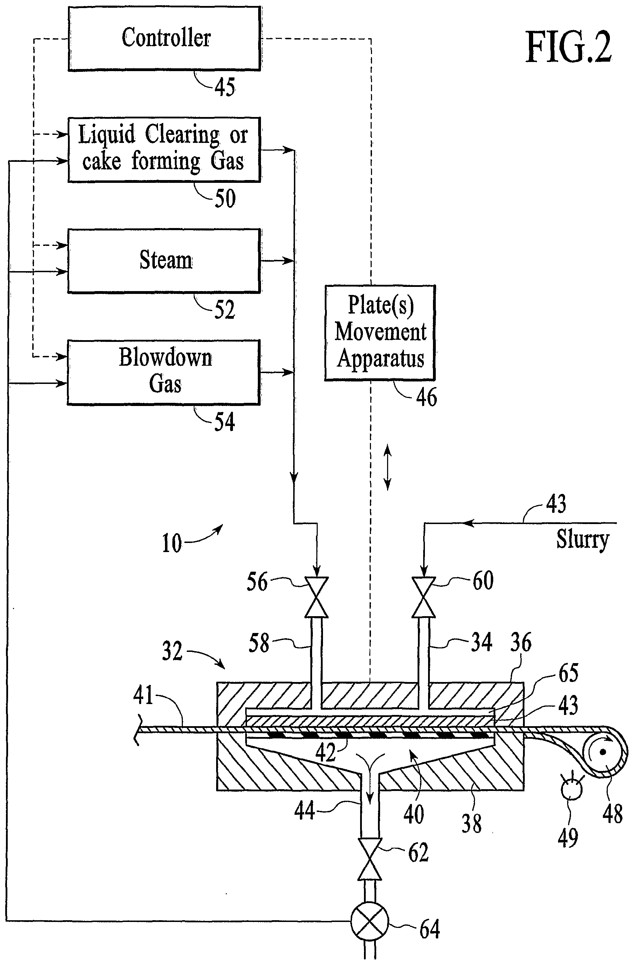

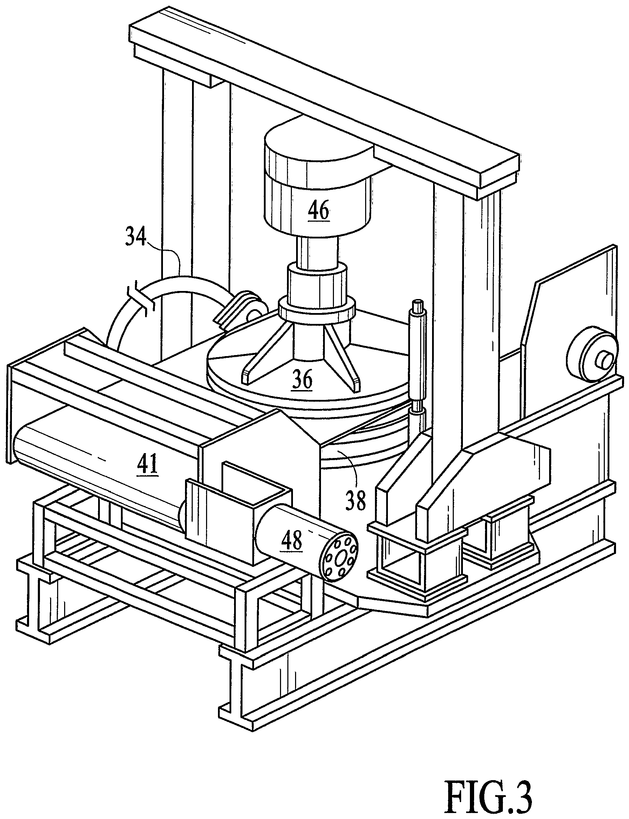

Fig 2 illustrates the overall separation system 10 in schematic block diagram, and with further reference to apparatus. The system 10 of the present invention may include a filter apparatus and the peripheral apparatus used to perform the method of the system. All or selected parts of the peripheral apparatus may be used as described herein with reference to the various embodiments of the present invention. Figs.1 and 2 illustrate one embodiment of the present invention wherein a pressure filter-type of apparatus and corresponding pressure filtration protocol is used to effect the separation of liquids and solids from a slurry. It should be noted, however, that the apparatus and methods embodied in Figs 1 and 2 are illustrative only; the inventive apparatus and methods herein may be used with a variety of filtration apparatus and/or filtration methods. For example, the apparatus and methods disclosed herein may be used with hyperbaric rotary disc or drum filters; filter presses; pressure leaf filters; membrane, ceramic, hydrophilic/hydrophobic disc filters; horizontal belt filters; diaphragm squeeze filters; centrifugal separators; automatic pressure filters (APFs); tower pressure filters; combinations of the foregoing and associated methods. Fig 2 schematically illustrates a filter apparatus 32, and Fig 3 is a perspective view of one embodiment of a filter apparatus 32 of the present invention. Referring to Figs 2 and 3, the apparatus 32 includes a slurry input port 34, an upper plate 36 having an internal cavity 37, a lower plate 38 having an internal cavity 39 that together form a filter chamber 40 by mating of the plates and their internal cavities 37 and 39. The cavities 37 and 39 are preferably congruent such that the filter chamber 40 formed thereby is of uniform dimensions throughout. At least one filter medium 41 is provided between the upper and lower plates 36 and 38. The filter medium 41 can be reusable, cleanable or limited use, i.e. disposable. The medium 41 is disposed on a porous filter belt that is stationary and supported on a suitable surface 42 when the plates 36 and 38 are closed, and travels through the chamber 40 when the plates 36 and 38 are separated. The filter medium 41 collects solids of an input slurry 43 when the filter 32 is operated with the plates 36 and 38 closed, and carries a collected filter cake (not shown) out of the chamber 40 when the plates 36 and 38 are separated. Liquids, separated from the slurry as filtrate, pass through surface 42 and exit through filtrate exit port 44, which is in fluid communication with the lower cavity 39. The liquids separated from the slurry exiting via filtrate exit port 44 may be conducted to selected locations as described herein.

The filter apparatus 32 may be controlled in its operations by a controller 45 which includes controls for a plate movement apparatus 46, such as equipment employed in opening and closing the plates 36 and 38, and may further control a filter media movement apparatus 48 for moving the filter medium 41 during process stages which include separating the plates 36 and 38. The controller 45 also may control the operation of input streams of several liquids or fluids, shown in Fig 2 as liquid clearing or cake-forming gas at 50, steam at 52, and drying or conditioning gas at 54. These and other sources of fluids may be input via a valve or valves 56 to provide fluid to the filter chamber 40 through an input port 58. It should be understood that one or more of different fluids may serve as one or more of the liquid clearing or cake forming liquid or gas, steam or drying or conditioning gas. These fluid inputs may be introduced by a single input port (not shown), or by separate input ports such as input port 58 and input port 34. When the plates 36 and 38 are closed, the slurry 43 may be introduced into the chamber 40 through a single input port 34 with suitable valve means 60, and distributed within the chamber 40.

A filtrate valve 62 may be positioned in fluid communication with the filtrate exit port 44, and used to separate and/or direct various fluid streams exiting the port 44. For example, the filtrate valve 62 may be used to separate liquids from gases in the filtrate, or may be used to separate liquids of differing characteristics. As depicted in Fig 2, a fluid stream, for example, a conditioning gas or liquid exiting port 44 with the filtrate may be directed back to its source and recycled, affording energy efficiency. A separator 64 may be positioned in fluid communication with the filtrate exit port 44, and used to separate and/or direct various fluid streams exiting the port 44. The separator 64 may be used to separate gas for liquids, or gas from gas or liquid from liquid, or combinations thereof. The separator 64 may be upstream or downstream of the valve 62, or may be in place of the valve 62.

In some embodiments of the present invention, the apparatus 32 may include a belt wash device 49. The belt wash device 49 applies a fluid, such as water or solvent to the filter medium 41 as it is moved out of the filter chamber 40 by the medium movement apparatus 48, to clean any residual slurry from the medium 41 in preparation for its subsequent re-introduction to the filter chamber 40 by the movement apparatus 48.

The details of the filter apparatus construction are shown and described in my prior U.S. patents 5059318, 5292434, 5462677, 5477891, 5510025, 5573667, 5615713, 6159359, 6491817 and 6521135; as well as documents PCT/US03/01746 (WO03/0161801), and PCT/US2004/018644 (WO 2005/007270). In certain of those patents multiple filter apparatus modules stacked above each other are disclosed, as well as shallow chamber filter apparatus and slurry distribution apparatus that are used in accomplishing filtration of slurry streams of variable filterability and characteristics.

An objective of the system, apparatus and methods of the present invention is to treat slurries in a filter for the separation of liquids and solids, washing, leaching, and the extraction of liquid as filtrate and creating a completely or substantially or optimally dry filter cake of solids. In some slurry treatment process it is the extraction of liquid or effluent that is desired and in others it is the filter cake that is desired. The apparatus, methods and processes of the present invention for conditioning the slurry and the treatment of the slurry within the filter for formation of a cake within the filter contribute to the success of the separation operation. The physical characteristics of the filter cake within the filter can depend on pretreatment operations on the slurry as well as distribution and operations within the filter.

The volume of the chamber 40, and, in some embodiments of the present invention, its conformation, may be determined by the characteristics of the slurry being treated, and is sometimes very shallow, ½ cm to 6 cm, to provide for uniform distribution, or may be of greater vertical dimension, 15 to 22 cm, for slurries that are easily distributed. The mating of the plates forming the chamber and the sealing of the filter media preferably is at an elevated pressure so that the interior of the chamber can be subjected to pressures as high as 400 psi when applicable. The plates and the filter media can be constructed of suitable material to be able to be subjected to high temperatures and pressures as applicable during the operation of the filter apparatus. Such material for the plates can be metal, elastomers or plastics that can withstand sustained exposure to the temperatures and pressures applied to the apparatus.

After the chamber 40 has been formed and sealed and a controlled amount of slurry has been introduced into the formed chamber 40, through valve 60 and properly distributed throughout the chamber 40, the interior of the chamber 40 is preferably subjected to at least one controlled introduction, more preferably a controlled series of introductions through the valve 56 and input port 58. Even distribution of the slurry 43 within the chamber 40 is typically desired to assure that any further treatment within the chamber 40 is uniform throughout the chamber 40. As will be further described herein, uniformity throughout the chamber 40 and its contents aids in deriving the efficiencies and process optimization. In some embodiments of the methods and processes of present invention, the filter apparatus 32 is incompletely filled with the slurry 43 such that an air space 65 exists within the chamber 40 (referring again to Fig 2) for the purpose of insulating the chamber against heat loss. In this manner, residual heat is retained, enhancing the energy efficiency of the system. The input port 58 may be the same port as the slurry input port 34 with suitable isolating valving, and vice versa. The input port 58 carries conditioning fluid, such as liquid clearing or cake forming gas from the source 50, or steam from the source 52, or drying and/or conditioning gas from the source 54. The timing and duration of the input of these materials is preferably under the control of the controller 45 and in accord with a suitable protocol or program, preferably implemented in software or firmware.

Referring to Figs 1-3, the application of a pressure differential at block 14, following the slurry fill block 13 results in a first quantity of free liquids, the free liquids being extracted as effluent or filtrate, and the filter chamber 40 is designed to pass those extracted free liquids through the filter media lower plate to the filtrate exit port 44. The extraction of the first quantity of free liquids from the slurry forms, or begins to form, a cake of solids within the chamber 40. In some embodiments of the present invention, the pressure differential applied to the slurry 43 results from pumping the slurry into the input port of the chamber. In some embodiments of the present invention, the pressure differential applied to the slurry 43 results from applying to the chamber 40 and slurry 43 a fluid under pressure, for example a gas, air or steam, or conditioned gas, air or steam, or combinations thereof. In some embodiments of the present invention, the pressure differential applied to the slurry 43 results from expression within the chamber 40 by an elastomeric diaphragm or bladder (not shown). In some embodiments of the present invention, the pressure differential applied to the slurry 43 results from combinations of slurry input pressure, fluid or gas pressure and expression.

Referring to block 15 of Fig 2, the subsequent introduction of a first fluid, also described variously herein as clearing or cake-forming fluid, preferably comprising air, gas or steam, or conditioned air, gas or steam, is intended to extract from the slurry a second quantity of liquids as free liquids which exit at exit port 44. The extraction of the second quantity of liquids from the slurry continues to form the cake of solids within the chamber 40 in a desired degree of dryness as the liquids are extracted as filtrate. In some embodiments of the present invention where fluid or gas pressure is not applied to the slurry at block 14 (application of pressure to the slurry), then it is preferred that clearing fluid be applied as a separate step, per block 15.

In many instances, it is desirable to further treat the formed cake and to increase its dryness. In some embodiments, following the introduction of the first fluid, there is introduced a second fluid (as shown by block 16), comprising a conditioning gas. The conditioning gas can condition the cake for further liquid extraction, by heating and/or by increasing cake permeability, thus permitting an additional amount of liquids to be forced from the slurry and/or further drying the cake. Without being bound by theory, it is thought that the second fluid reduces surface tension within solid/liquid interfaces within cake interstices, and/or creates such interstices. The second fluid is preferably a gas, which may be at ambient temperature or at elevated temperature as dictated by an analysis of the slurry to be treated an accord with the temperature that results in the desired, maximal or optimal separation of the slurry. In some embodiments of the system, apparatus and methods of the present invention, the second fluid may comprise steam, introduced to the chamber 40 to continue the extraction of liquids from the formed cake. Steam, especially superheated steam, can absorb and extract liquids from the cake formed within the chamber 40, which then exit through the filtrate exit port 44. The pressure of the fluids introduced to the chamber 40 can be used to precipitate, and or vaporize, liquids from the cake as pressure is dropped and sudden changes pressure can be used to create desirable interstices in the formed cake, and to favorably impact the rheology of the fluids therein, as the gases expand.

As depicted by block 17, the chamber 40 can also have blowdown gas (which may comprise air) 54, introduced through port 58 to continue the treatment of the cake prior to its discharge from the chamber 40. Such blowdown gas may be conditioning, or conditioned, gas, and may also be used to control the temperature of the cake and/or the chamber to approach a desired exit temperature, pressure, flow, or other process parameter. Blowdown gas functions to squeeze or express the cake, and can act as a heat transfer and/or drying agent.

Each of the foregoing steps and introductions may be under the control of the controller 45 in a preprogrammed and repeatable sequence.

After the filtrate has been extracted and the cake has been treated to attain the desired dryness or condition, the chamber 40 is opened by separating plates 36 and 38, and the filter media moving apparatus 48 is operated to move the belt of filter media 41 out of the chamber 40 for discharge of the cake to a suitable process stream or container (not shown). The filter medium 41 is then cleaned for reuse and prepared for reentry to the chamber 40 or another segment of filter medium 41 is transported into the filter chamber 40, aligned with the upper and lower plates 36 and 38. The filter apparatus 32 may also use a disposable filter medium 41 as well as the cleanable filter medium 41 just described. The plates 36 and 38 are then closed again and the process of treating another input of slurry may begin. These cycles are continued until all desired slurry has been processed.

The introduction of conditioning fluids, comprising gases, liquids and steam, to the apparatus, peripheral elements, or to the slurry, has been found to maximize and/or optimize liquid/solid separation. In one embodiment of the present invention, the introduction of hot compressed gas, for example at the steps shown as block 15, or block 17, or both has been found to increase the efficiency of extraction of liquids from the cake. In the present invention, compressed gas is permitted to retain all or part of a heat of compression imparted to the gas while compressing in a compressor means. This can comprise bypassing an aftercooler or intercooler, or both, associated with the compressor means. In one embodiment of the present invention, the compressed gas is allowed to cool by 10% or 20% or 30% or 40% or 50% or more prior to introduction into the filter chamber 40 and/or slurry 43. In another embodiment of the present invention, the liquid clearing/cake forming fluid of block 15, or the blowdown gas of block 17, or both, comprises a gas which is compressed and heated in the compressor means, and then exits the chamber 40 through the filtrate exit port 44 to the valve 62, where it is returned to the compressor means for recycle and reuse. In another embodiment, the conditioning gas is preferably heated by a heat exchanger (not shown) associated with the filter apparatus or 32 from peripheral equipment in a manufacturing process, thus aiding the efficiency of the overall process.

The use of dry superheated steam has also been shown to assist in the extraction of liquids from a filter cake. The term "superheated steam" is to be accorded the conventional definition as known to the art, that is, steam that is generally heated to a temperature higher than the boiling point corresponding to its pressure. It has been surprisingly found, however, that unique benefits result by keeping the steam just above its condensation point in the liquid/vapor condition of the steam. Steam in its gas phase and above its condensation temperature or pressure is optimal in extracting liquid from the cake. Preferably, for heat transfer purposes, steam at a pressure and temperature just above its saturation point, (for example 1% or 2% or 5% or 10% above) is directed into the chamber 40. As it penetrates the cooler cake, the steam becomes saturated inside the cake, resulting in the greatest heat transfer for the lowest energy cost. Steam, especially superheated steam, directed into the filter chamber 40, in addition to extracting liquids from the slurry 43 also aids maintaining an elevated temperature within the chamber, thus promoting separation efficiency. The use of superheated steam can be employed in some embodiments of the present invention as an extraction fluid in the system. Steam (especially dry steam) passing through a filter cake can absorb and extract liquids existing in the cake at low energy cost. In one embodiment of the present invention, steam is introduced to the filter chamber 40 after the clearing gas step, as shown in Fig 2. Steam dwell time within the chamber 40 is important to extraction efficiency, and depends upon the mass of the chamber 40, the temperature and pressure of the steam, and slurry characteristics. Preferably, however, a flow of steam is desired to avoid unwanted condensation within the chamber 40. In one embodiment of the present invention, steam flow is regulated by a valve, such as the filtrate valve 62 or the separator 64, to constrict and control steam outflow from the chamber 40 to allow optimization of steam pressure, temperature and dwell time, while minimizing energy usage. In a preferred embodiment, the valve 62 is controlled by the controller 45. In another preferred embodiment, steam which is removed from the chamber 40 through the valve 62 or separator 64 is recycled, either back into the chamber 40 as an extraction fluid, or to another process stream. Such recycled steam may be recycled directly without further heating or compression, or may be reheated and/or recompressed. In another preferred embodiment of the present invention, steam which is used to preheat the filter chamber 40 is thereafter charged to the filtration chamber 40 as the extraction steam, and may be directly charged, or reheated and/or recompressed.

Conditions within the filter chamber 40 can be varied during the filtration process to accomplish a variety of desired results. For example, temperature and pressure within the chamber 40 may be varied, together or independently. Temperature and/or pressure may be varied continuously, uniformly, discontinuously, discretely, over part of the separation cycle, over all of the separation cycle and combinations thereof. In some embodiments of the present invention, temperature and/or pressure are varied by the introduction of a fluid which has the primary purpose of directly conditioning the filter cake, and a secondary purpose of conditioning the chamber 40. In other embodiments of the present invention, temperature and/or pressure are varied by the introduction of a fluid which has the primary purpose of conditioning the chamber 40. For example, steam may be input into cavities (not shown) formed within the plate 36, the plate 38, or both, to directly heat the plates and thereby transfer heat to the chamber 40 and the slurry 43 therewithin.

As previously described, as the filter cake begins to form from the slurry 43, steam may be introduced as a drying or conditioning fluid. Some liquid may initially condense from the steam before the cake and/or chamber 40 rises in temperature to be above the condensation temperature. The condensed liquid then comprises a cake wash fluid to assist in washing the cake and carrying liquids out as filtrate. After the temperature of the cake rises above the condensation temperature, the steam then comprises the drying or conditioning fluid to further dry the cake as the steam passes through the cake and absorbs moisture. After the use of high temperature steam, the chamber 40 may need to be cooled before the cake is removed in preparation for the next filtration cycle. The introduction of drying or conditioning gas 54 can be used for that purpose, and can be performed as the blowdown step of block 17. In a preferred embodiment a heat exchanger or exchangers (not shown) is used to recover heat energy imparted to the drying or conditioning gas 54 by the chamber 40. The recovered heat energy can then be used to heat another process stream, such as any of the fluids or gases inputted to the chamber 40, or can be converted to another form, such as mechanical energy, for use in other process steps.

The valve means 62 or 64 at the filtrate exit port 44 may direct the desired filtrate from the chamber 40 to its destination. If the desired product from the filtration process is a dry filter cake, the filtrate (i.e., the liquid stream) and gas or steam present with the filtrate, can be recycled or treated and reintroduced for other uses. The dried filter cake can also be discharged to further processes. The fluids (including gases or steam) extracted from the slurry as filtrate may have several uses dependent upon the characteristics of the fluid being extracted. For example, the first extracted fluid may be used for one purpose while the later extracted fluid may have a different use. Extracted fluids may be used as fluid make-up in the slurry stream entering the apparatus of the present system. Where extracted fluids are gases or steam, they may be recompressed or regenerated and recycled at appropriate points in the process.

### Compressor Optimization

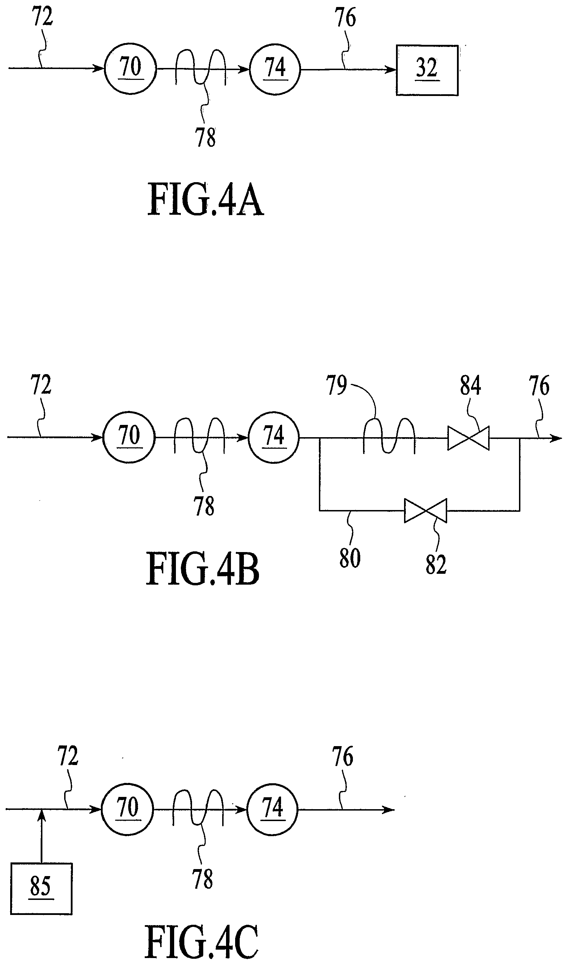

In pressure-type filtration apparatus, especially that disclosed in the previously cited US patents, compressed gas or compressed air is utilized to assist in forcing liquids from the slurry cake within the filtration chamber of the filter apparatus. Such compressed gas or air may comprise the first fluid, the second fluid or both as described herein. In a compressor as commonly used of the type to obtain compressed air or gas, the gas, e.g. air, may be heated up to about 50-250° C by heat of compression. Normally, the compressed air is cooled, by an intercooler, aftercooler, or combination thereof, in order to permit the moisture within the air to be removed, and to avoid downstream effects of heat on sensitive apparatus components. The cooled, dry air may then be utilized to force liquids from the slurry as described. It has now been surprisingly found that conditioning gas or air at an elevated temperature, in addition to elevated pressure (e.g. above 15 psi) is important to attain the maximal or optimal liquid solid separation, especially in de-watering applications. Furthermore, it has been found that heated conditioning air can permit much lower conditioning pressures with concomitant energy savings. Reference is made to Figs 4A-4C wherein stylized schematics show a first compressor stage 70, having an air (or gas) inlet 72, a second stage 74, a compressed air outlet 76 and an intercooler 78. According to the invention an aftercooler 79 (shown in Fig 4B) cools air exiting from outlet 76, prior to being fed into a filter apparatus 32 (Fig. 1 shows exiting compressor air or gas 76 as block 54). Efficiency is attained by the process in the following non-limiting examples. As shown in Fig. 4A, the system of which does not form part of the present invention, the compressor discharge may be configured to eliminate the aftercooler 79 and to discharge the hot compressed air directly to the appropriate input in the filter apparatus 32. According to the invention the aftercooler 79 is retained, but bypassed in part, permitting the hot compressed air to flow directly to the appropriate input in the filter apparatus 32. Fig 4B illustrates a bypass pipe 80 and associated valve 82 to permit air to bypass in part aftercooler 79 (and associated valve 84). The bypassed hot compressed air is mixed with cooled compressed air from the aftercooler 79, by selecting or deselecting valves 82 and 84 to select a compressed air inlet temperature and achieve an optimal drying as desired by slurry parameters. Because the aftercooler 79, and intercooler 78 tend to remove moisture from the air, bypassing the aftercooler 79 and/or intercooler 78 results in air with more moisture. This may be used to advantage in certain applications with respect to certain slurries and certain types of separation apparatus. Thus moisture can act as a conditioning fluid to aid in the liquid solid separation. Moreover, the added moisture of hot air is much more effective, thus more energy efficient, in transferring heat, as compared to hot dry air. Where the compressor is multistage, an inlet air conditioning system 85 (such as a heat exchanger or re-compressor to result in recycled heat, discharge heat or recompression heat) may be installed at an upstream stage to control air temperature and/or pressure prior to entering a downstream stage. Thus, air temperature may be controlled at the inlet 72 to the first compressor stage 70, or any stage thereafter.

The conditioning gas or air may be applied to the slurry, the filtered solids, or to components of the filter apparatus itself. Preferably this conditioning gas is applied as illustrated by block 15 depicted in Fig 1. Combinations of the foregoing methods and apparatus may be employed. Rate of gas flow into and out of the chamber 40, as well as volume of gas, at any of the above stages, may also be controlled, and has been found to contribute to optimal liquid solid separation. By controlling gas flow rate, gas contact time with apparatus, e.g. heat exchangers, internal compressor surfaces and piping is controlled. This control of air contact time yields an ability to modify or control air temperature within the filter chamber 40 (see Fig 2), and/or the contents therein. As is apparent, not only is there an energy savings inherent in the process, but by controlling air temperature flow rate and pressure, drying can be maximized, or optimized, with respect to the characteristics of different types of slurries. All of the foregoing embodiments may be implemented through the use of a microprocessor, or programmable logic controller (PLC) 45, illustrated schematically in Fig 2, appropriately operatively connected to sensors (not shown) capable of sensing the parameter(s) of interest, e.g. temperature, flow rate, pressure, etc. The PLC 45 can be set to direct the desired output, based upon the chosen input or inputs. Multiple PLC's 45, can be coupled as desired for greater flexibility in interfacing optimum physical/environmental variables between the compressors and filter apparatus. Self-controlling valves, based upon pressure differential or flow, can be employed, independently of, or with a PLC 45. In this, and other embodiments and applications described herein, parameters of interest include, but are not limited to: air, gas, steam and slurry temperature, flow rate, and pressure; slurry solids particle size, particle size distribution, uniformity, specific heat, density, compressibility, packing fraction, crystal shape, shear resistance, rheology and particle porosity. The present invention further contemplates a method of maximizing and/or optimizing liquid solid separation, especially dryness, by assessing and measuring certain of these parameters with respect to a specific slurry, or class of slurries, and thereby determining efficient, optimum processing parameters, with process ranges tailored to particular applications.

The following illustrate: Example slurry A may benefit from 100-150 psi and 1-50 SCFM per ft² filter area initially to optimize drying and separation effectiveness. Example slurry B may benefit from 50-100 psi and 1-50 SCFM per ft² filter area initially to optimize drying and separation effectiveness. Example slurry C may benefit from 20-50 psi and 1-50 SCFM per ft² filter area initially to optimize drying and separation effectiveness. Example slurry D may benefit from a combination of the foregoing, applied incrementally.

### Regeneration/Recompression

Once the conditioning gas or air from outlet 76 (or steam) has passed through filter apparatus 32, or if it has been partially diverted, or has been used as pre-heat, controlled heat or maintenance stream for the filter apparatus, it can be recaptured and recycled. For example, it may form part of inlet air conditioning system 84 to repeat the compression cycle, or it may be channeled, in part or in total, to compressor inlet 72, as shown in Fig 4. The compressors and associated piping, valving, etc may also be insulated, further preserving heat and energy. Effluent gas from filtered liquid or filtrate exit port 44 (Fig 2) is also preferably recycled and regenerated.

### Pressure Protocol

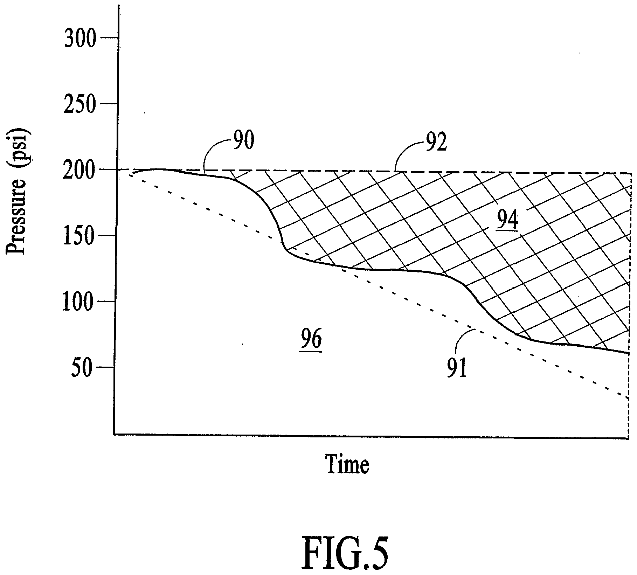

Fig. 5 shows one embodiment of implementing a method for maximizing and/or optimizing drying of a slurry. The graph of Fig. 5 illustrates a pressure protocol when a compressed gas or compressed air is utilized to assist in forcing liquids from the slurry cake within the filtration chamber of the filter apparatus. It has been surprisingly found the solid-liquid separation (de-watering) is accomplished in a more efficient (especially energy-efficient) manner by varying the pressure of the compressed air applied to the slurry and resulting filter cake within the pressure filter apparatus. The pressure may be varied at relatively discrete times during the separation, as illustrated by a solid line 90 of the Fig, or may be varied more or less continuously, as by a variable frequency drive, shown by the dotted line 91. The prior art application of relatively high-pressure compressed air is represented by dashed line 92 of Fig 5, wherein air at a high pressure, for example, 200 psi is applied over the filtration time interval. The hatched region 94 illustrates energy savings using the inventive pressure-protocol method, compared to the constant pressure method of art. The unshaded area 96, forming the region under the line 90 represents the process optimization. In the following Examples, reference is made to Figs 1-5.

Example Slurry A: Compressed air input 76 to the filter 32 initially is set at 100-150 psi for optimum heat transfer and drying power. As the filtered solids dry, flow of liquid from the formed cake may decrease, and gas flow (e.g. conditioning gas or gas entrained with the filtrate 44 (Fig 2) increases, and decreasing pressure to 120 psi becomes optimum for continued drying with optimal energy usage. A final stage occurs at a threshold of flow, temperature and pressure when the filter cake is sufficiently dry such that 30-40 psi air becomes optimum, until the filter cake is discharged.

Example Slurry B: Compressed air input 76 to the filter 32 initially is set at 50-100 psi for optimum heat transfer and drying power. After flow of liquid decreases and/or gas flow increases, decreasing pressure to 40-60 psi air becomes optimum for continued drying with optimal energy usage. A final stage occurs at a predetermined flow, temperature and threshold which optimizes the use and efficiency of the gas-supply equipment (i.e. compressor), and corresponding drying rate, when the filter cake is sufficiently dry such that 20-30 psi air becomes optimum, until the filter cake is discharged.

Example Slurry C: Compressed air input 76 to the filter 32 initially is set at 20-50 psi for optimum heat transfer and drying power. For this slurry, this pressure is found to be optimum and continuously applied until the filter cake is discharged. In general, it has been found that a high temperature and high velocity air flow provides optimum drying power, with relative temperature and velocities determined by physical characteristics of the particular slurry.

The foregoing embodiments may be implemented as previously described through the use of the microprocessor, or programmable logic controller (PLC) 45 appropriately connected to sensors capable of sensing the parameter of interest, e.g. temperature, flow rate, pressure etc, and controlling output of one or more compressors, or stages thereof, or through self-modulating control valves. The PLC 45 can be set to direct the desired output, based upon the chosen input or inputs.

Additionally, it is within the scope of the present invention to control conditioning gas pressure, flow rate, velocity, etc. within the filter apparatus 32 by providing a venting means or apparatus, e.g. a valve (not shown) or series of valves, to regulate the pressure within the chamber 40 of the filter apparatus 32.

### Flow Protocol

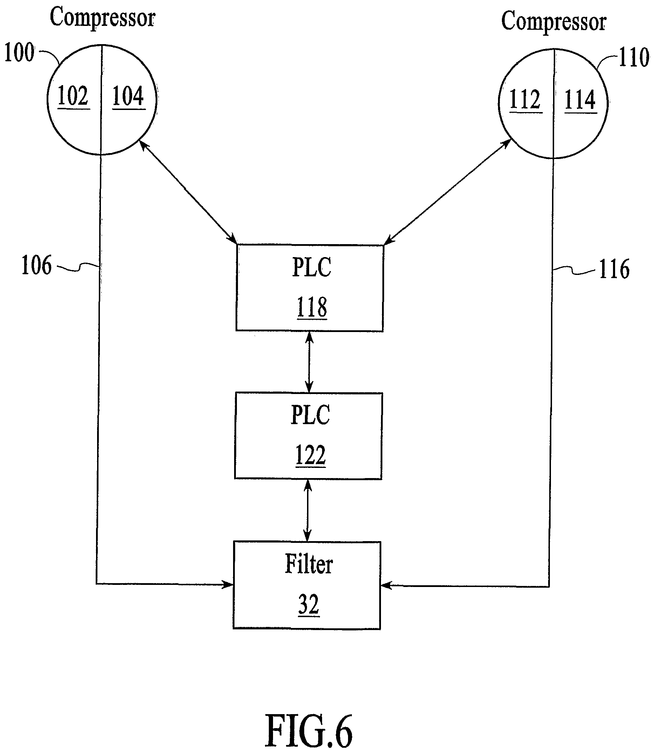

Fig. 6 is a diagrammatic equipment flow chart illustrating a gas flow protocol. In the Fig there is a first two-stage compressor 100, having first stage 102 and second stage 104, and a compressed gas feed line 106. A second two-stage compressor 110, having first stage 112 and second stage 114 and a compressed gas line feed 116 is shown. Both are electronically operatively coupled to a PLC 118. The feed lines 106 and 116 are coupled to a filter apparatus 120, to supply compressed gas or air as described herein and as further described in the patent applications incorporated herein. A PLC 122 is operatively electronically coupled to the filter apparatus 32. The PLCs 118 and 122 may be identical to the PLC 45 described with reference to the overall system 10, or they may differ for their specific application, i.e. the PLCs 118 and 122 are operationally connected to the compressors 100 and 110, as well as to the filter apparatus 32. By use of sensors (not shown) in and around the filter apparatus 32, parameters of the slurry, and other input streams, as well as ambient conditions can be measured, and coupled with information about the slurry, the filter chamber, the filtered solids, flow rate, temperature and pressure, the PLC's 122 and 118 interact to modify and control pressure, temperature and flow rate of compressed gas through the feed lines 106 and/or 116. Various transducers capable of sensing the desired conditions may be connected to a single PLC 118, 122 or 45. The method and apparatus of the present invention provides for feeding to filter 32 compressed gas or air from either or both compressors 100 and 110, and from either or both stages 102, 104, 112, and 114 thereof. As shown also in the Figs and described herein, temperature and pressure of the compressed gas can be controlled. This affords optimum efficiency in separation and/or de-watering.

### Mass/Heat Transfer

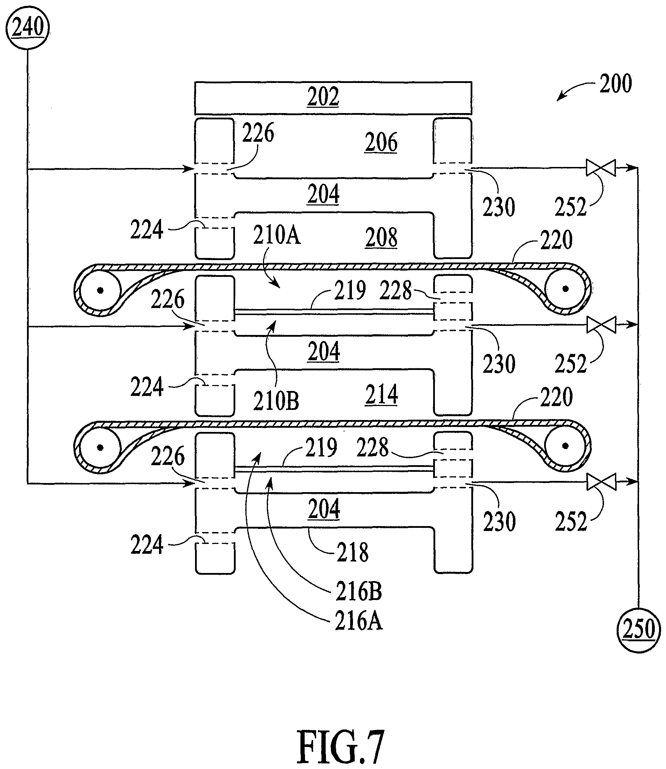

The apparatus, methods and processes of the present invention afford further efficiencies by taking advantage of thermodynamic considerations. For applications, methods and apparatus which advantageously make use of heat to improve efficiencies, in general the more closely the heat source is placed to the mass to be heated, the better the efficiency. Not only is heat energy used more effectively, by minimizing heat loss through, e.g. radiation, convection and conduction, but efficiency of the liquid-solid separation, in particularly de-water efficiency, is increased. It has been surprisingly found that the rate of drying improves with proximity, over and above the energy savings alone derived from maximizing heat transfer. Steam or hot gas pre-heat conducted into a properly configured filter chamber with mass adjacent to process filtered solids greatly improves dryness and efficiency, especially compared to deep chamber filters, or less efficient filter configurations, such as hyperbaric chambers. An example of a preferred chamber configuration is described in commonly owned US patent 6,491,817. Referring to the pressure filter apparatus described in the above-cited patent, and to Figs. 2 and 7, the use of horizontal plates, coupled with uniform slurry feed distribution inherent in the structure of such apparatus, permits very direct, uniform and consistent application of heat, when appropriate, thus resulting in a highly efficient separation, and especially de-watering. Chamber configuration, mass and conductive materials, e.g. steel or stainless steel, contribute to this result.

Referring to Fig 7 there is shown a schematic of a multiplate pressure filter apparatus 200 according to one embodiment of the present invention. The apparatus 200 comprises an upper platen 202, and a plurality of filter modules 204, having a dumbbell, or "H" shaped cross section, stacked atop one another to form a plurality of chambers. Thus, in the example of Fig 9, there is formed a first upper chamber 206, a first lower chamber 208, a second upper chamber 210, a second lower chamber 214, a third upper chamber 216, and a third lower chamber 218. The chambers 210 and 216 are further each divided into 210A-B, and 216A-B by a separation plate 219. Interposed between filter modules 204 are belts 220 of filter media. There are provided slurry inlets 224, gas, fluid, and heat source inlets 226, filtrate outlets 228 and heat source outlets 230. A heat source 240, which may be hot gas, hot air, steam or liquid, is introduced through ports 226 into the chambers 206, 210B and 216B. These chambers are in close proximity to the filter medium 220 and incoming slurry in chambers 208 and 214, as well as the filtered solids in chambers 208 and 214. This affords maximum heat transfer, resulting in a rapid drying of the slurry. The hot gas, hot air, steam or hot liquid is preferably heated to about 40-250°C, and acts to directly heat the slurry and/or filtered solids, as well as to heat the filter chambers 210 and 214, thus indirectly further heating the slurry. Additionally, a steam or other heat source can be used to preheat the slurry at or before slurry inlets 224, thus further speeding drying efficiency, and providing optimal energy efficiency of the process. The hot gas, hot air, steam or hot liquid exiting at ports 230 is collected, in collector 250, where it may be regenerated, reheated and recycled by returning to any one of various processing points as herein described, including source 240. A valve/separator 252 may be positioned in fluid communication with the exit port 230, and used to restrict the flow of fluids exiting the prot 230, and/or to separate and/or direct various fluid streams exiting the port 230. The separator 252 may be used to separate gas for liquids, or gas from gas or liquid from liquid, or combinatons thereof. Any gas or fluid heat exiting with the filtrate at ports 228 may also be collected, regenerated and recycled. While the apparatus described in Fig 7 shows three sets of filter modules 204, forming two separation chambers, the invention described applies equally well to a single separation chamber, or to more than two separation chambers.

The recaptured hot gas, steam or liquid of collector 250 may additionally be returned to be used as a belt wash. Referring again to Fig 2, the belt wash device 49 is positioned to wash the belt and filter medium 41. The belt wash 49 is one example of peripheral equipment referred to herein, and fluid or gas therefore may be supplied by source 250, or any other recycled source of hot gas, steam or liquid.

In one embodiment of the present invention, the incoming slurry stream may be analyzed for pH, moisture, particle size, particle size distribution, compressibility of solids, solids content, temperature or any measurable parameter prior to introduction to the filter apparatus 32 or 200. Based on the analysis of the slurry stream and the desired end product that is to be produced, the slurry stream may be subjected to a treatment process, automatically, manually or under the control of PLC 45, 118 or 122 (see Figs 2 and 6). Pre-heating the apparatus 32 or 200 and or slurry and/or filtered solids with hot gas or steam is an example of one such process. Heating the apparatus and or slurry and/or filtered solids with steam during separation is another example. Others include adjustment of the pH, addition of polymers, coagulants or filter aids.

### Venting

In one embodiment of the invention, it has been found that conditioning (e.g. heating, cooling or regulating temperature) certain elements of the filter apparatus 32 or 200 provides the aforementioned optimization and/or efficiencies in solid-liquid separation (de-watering). Selected pre-heating of the filtration chamber 40 prior to introduction of the slurry produces higher efficiencies. However, optimal separation and energy efficiencies may be realized when pre-heat temperatures and pressures are controlled as dictated by characteristics of the slurry and the desired result. Typically, commercially-available apparatus utilized to produce hot compressed gasses (including steam) is not readily adjustable or controllable in terms of output flow rate, pressure and temperature. A compressor, for example, is commonly a fixed-discharge type. Referring to Fig 7, there is shown in diagrammatic form the pressure filter apparatus 32 having upper plate 36 and lower plate 38, between which there is the filter medium (not shown). A steam source 306, and a compressed gas source 308 are operatively coupled to the apparatus 32, and a PLC 45 is operatively connected to filter apparatus 32, steam source 306 and gas source 308. A slurry input is shown as 312, a solids output is shown as 316, and the filtrate exit port is 44. A separator 320 may be interposed in the filtrate exit port 44 to separate any hot gas, steam or other heat containing gas or fluid form the filtered liquid. The recovered heat source is then regenerated, and/or recycled, either directly back into the apparatus 32 (e.g. to steam source 306), or to peripheral equipment as described. In one embodiment of the present invention, the filter apparatus 32 is provided with a pressure and or heat regulating means 314, for example a valve, which may be controlled by PLC 45. Steam and/or conditioning gas, entering the filter apparatus 32 or 200 (to condition the apparatus 32 or 200, or the slurry, filtered solids or filtrate) can thus be controlled in physical characteristics, without the need to modify the apparatus which produces the steam and/or gas. For example, if a higher pressure is desired within the apparatus 32 or 200, the regulating means 314 may be restricted to create a back pressure. Conversely, if less pressure is needed, the regulating means 314, can allow a portion of the flow from steam source 306 and/or gas source 308 to bypass the apparatus 32 or 200. This enables the inventive method of optimizing conditions of pressure, flow, temperature or the like, of steam or gas, or both, to pre-condition the apparatus 32 or 200, yielding the highly efficient separation of liquid and solid. In other words, physical conditions within the apparatus 32 or 200 can be precisely tailored to suit the characteristic of any particular slurry. The present invention also contemplates the use of heated liquids, together with, or instead of the steam, or gas, or any combination thereof. Of course, any flow of gas, steam or liquid from the valve means 314 can be recaptured and reused. In some embodiments, insulation may be placed around or within the separation chamber 40 or chambers to further preserve heat usage. In some embodiments, pre-heat steam, hot gas or hot liquid is directed to the upper plate 36 (see also Figs 2-3) of the filter 32. In some embodiments, pre-heat steam hot gas or hot liquid is directed to the lower plate 38 of the filter 32. In some embodiments, pre-heat steam hot gas or hot liquid is directed to both plates 36 and 38. In some embodiments, pre-heat steam, hot gas or hot liquid is directed to discrete chambers within the filter plate(s) (see Fig 7) of the filter 32 or 200. In some embodiments, steam, hot gas or hot liquid pre-heat may be employed prior to each filtration cycle; in some embodiments it may be employed periodically, such as after every other filtration cycle, or after every two, or three, or five, or ten cycles, or any multiple thereof.

In some embodiments, the slurry and/or apparatus treatment processes modify the permeability, rheology, texture, density etc of the cake that allow the passage of drying gases through the cake (e. g. through the formation of interstices) and thus assist in the creation of a drier filter cake. In some embodiments of the present invention, the filter apparatus conditioning/treatments afford optimum heat transfer efficiency leading to optimum separation efficiency. The reduction in processing time and the reduction of volume of treating liquids or gases increases the efficiency of the pressure filter and the economics of the system and apparatus. The elimination of peripheral equipment that has in the past been needed to further treat or dry a filter cake reduces the space requirements for a filter system and reduces the utility requirements for operation of the system. Whether it is the filtrate or the dried cake that is the product to be derived from the treatment of a slurry, the present system produces such products in shorter time and with less operating costs than other known available systems.

By applying the inventive energy saving and optimization apparatus, methods and processes of the present invention, it has been found that an Example Slurry D, requires conditioning air/gas at only 30 psi. The energy required to generate 30 psi air/gas is only 10 horsepower per 100 SCFM. By contrast 225 psi air/gas, which may be needed by a prior art separation process, requires about 25 horsepower per 100 SCFM.

It will be readily appreciated that the apparatus and methods of the present invention are not limited to pressure filtration apparatus of the type described in the US patents referred to herein, but may be applicable to a variety of filter types, technologies and apparatus. The following are non-limiting examples of such filter types, technologies and apparatus: horizontal plate (including multi-plate) pressure filters; vertical plate (including multi-plate) filters; hyperbaric rotary disc or belt filters; hyperbaric drum filters; filter presses; rotary filters; membrane, ceramic, hydrophilic/hydrophobic disc filters; horizontal belt filters; diaphragm squeeze filters; and centrifugal separators.

### EXPERIMENTAL

Table 1 below illustrates effectiveness and energy efficiency of drying gas (as hot air) employed, for example, as blowdown gas, exemplified in block 17 of the process of Fig 1. The Table illustrates that lower temperatures and pressures of treatment fluid tend to require less energy; however, many slurries ordinarily cannot be successfully de-watered at such energy-efficient pressures and temperatures. The methods of the present invention accordingly make use of energy efficiencies by use of separation protocols which combine high and low pressure and/or temperature treating fluid to achieve optimum separation efficiency.

| TABLE 1 | | |
|---|---|---|
| Gas pressure (psi) | Gas Temperature (°C) | Hp required @ 1 CFM |
| 35 | 182 | 0.10 |
| 100 | 210 | 0.2 |
| 150 | 255 | 0.22 |

As a general formula, gas pressure in psi, multiplied by gas temperature in degrees C results in an efficiency factor E. In some embodiments of the present invention, E is between about 1,200 and 65,000, preferably between 2000 and 22,500. Example slurry E is most efficiently treated with air ranging from 25 psi at 80° C to 50 psi at 200° C, thus has an E value of between about 2000 and 10,000. Example slurry F is efficiently treated with air ranging from 100 psi at 80° C to 150 psi at 150° C, thus has an E value of 8000-22,500.

### Example Separation Number 1 - Calcium Carbonate

Example Separation 1 is a filtration trial on a two-micron calcium carbonate slurry. Testing included dewatering and drying the calcium carbonate slurry, and producing a high quality filtrate. This example illustrates the use of steam as a treatment fluid to dewater, for example, at block 16 of the process of Fig 1, to create cake permeability, coupled with steam as a heat transfer medium, and followed by the use of air or hot air during blowdown.

The test objectives were to filter and dry the slurry to low (less than about 22%) moisture, thus reducing additional drying requirements, equipment, and operation costs. Cake solids levels up to 91% (9% moisture) were achieved during testing.

A Pneumapress® Model M1.3-316 filter with 1.3 ft² of filter area was used to efficiently dewater and dry the slurry with exceptionally high cake solids levels and clear filtrate free from solids and lost product. Compressed air, as clearing/cake-forming gas, was introduced to improve efficiency. Steam, as a conditioning fluid, was used to enhance performance and efficiently increase cake percent solids. A four step filtration cycle was employed: (1) the filter plates close and form a filter chamber which contains a filter media; (2) slurry, at a temperature from 40° C to 80° C was pumped into the filter chamber and a filter cake began to form on the filter media. As the filter cake began to form, filtrate passed through the filter media and exited the filter via the filtrate connection; (3) after the filter cake formation, blowdown gas enters the filter chamber and drives the remaining liquid into the filtrate chamber and dries the filter cake; and (4) after the blow down is complete the filter plates open and the dry filter cake is automatically discharged. Hot gas used was obtained directly from a compressor, without any intermediate cooling.

Results are shown in Tables 2 and 3 below.

**Table 2**

| Air/Steam contact conditions | Steam contact time (sec) | Air contact time (sec) | Solids(%) | Energy Ranking (normalized for cake moisture) |
|---|---|---|---|---|
| 80 psi steam; 100 psi, 200° C air. | 10 | 30 | 96 | 1 |
| 80 psi steam + 100 psi, 30° C air. | 10 | 30 | 91 | 2 |
| 100 psi, 200° C air. | NA | 180 | 91 | 3 |
| 100 psi 30° C air | NA | 330 | 91 | 4 |

**Table 3**

| | 85% Cake Dryness | 95 % Cake Dryness |
|---|---|---|
| Process A (prior art) | 2 Hp | Not obtainable |
| Process Example 1 of the present invention: 50 psi, 160°C air. | 1.25 Hp | 3.1 Hp |
| Process Example 2 of the present invention: 60 psi steam plus 50 psi, 160°C air | 1.1 Hp | 2.0 Hp |

Table 3 above shows estimated energy use, in terms of horsepower, for a prior art separation process wherein a single, continuous supply of cooled compressed air is used to supply pressure for the separation, and to dry the formed cake. Method 1 of the present invention used heated, compressed air in the blowdown step, and Method 2 of the present invention used heated, compressed air in the blowdown step plus steam as the conditioning fluid (as per block 16 of Fig 1). The input slurry was a mineral silicate compound. The data show that a small amount of steam (at low energy cost) significantly increases cake solids percentage in a short cycle period. Utility use noted in the Table excludes slurry pump and hydraulic power unit motor.

### Example Separation Number 2 - Flotation (Fine) Coal Slurry

Fine coal slurry was dewatered and dried under laboratory conditions. The objectives were to filter the slurry to desired moistures, and determine production rates and utility use under varying conditions. A lab filter comprising a Pneumapress® test cylinder, which emulates a pressure filter, was set up and connected to sources of compressed gas and steam. Slurry was poured into a funnel entry at the top of the lab unit, and the filtrate was collected in beakers.

Process Conditions: slurry, having approximately a 25% solids content, was input at ambient (20° C) temperature. Cycle time was 2 to 5 minutes. Filter cake thickness was 0.5 - 1.7 cm, and moisture varied from 9.7 to 19.4 percent. Slurry throughput was 140 to 240 kg/m² filter area/hr. Table 4 below shows the improvement in dryness, and efficiency gained, by the use of hot (uncooled) compressed gas, obtained directly from a compressor. The hot gas was air, employed as both a clearing gas (block 15) and blowdown gas (block 17) for the times indicated in the Table. The prior art process used a single, continuous supply of cooled compressed air to supply pressure for the separation, and to dry the formed cake.

**Table 4**

| Process | Air pressure/ Temperature | Clearing air time | Blowdown air time | Cake solids | Cake Thickness |
|---|---|---|---|---|---|
| Prior Art | 100 psi air at 25° C | 60 sec | 60 sec | 73% | 2" |
| Process Example 3 of the Present Invention | 72 psi air at 193° C | 12 sec | 120 sec | 96.8% | 1" |
| Process Example 4 of the Present Invention | 72 psi air at 193° C | 24 sec. | 300 sec | 96.8% | 1" |

Additional data was obtained on flotation coal during a pilot test, using equipment substantially as described in Example Separation Number 1 above. In this test, production rates of 45 to 80 lbs dry solids/ft² of filter area/hr with <10% moisture were achieved. Filtrate was clear and free of solids during testing. Average utility use (excluding slurry pump and hydraulic unit) ranged from 10KW to 50KW per dry ton.

Testing showed that the methods and apparatus of the present invention resulted in substantially higher cake solid levels and substantially higher product BTU content than that of the prior art processes. Additional advantages of lower operating costs and maintenance requirements are also afforded by the methods and apparatus of the present invention.

### Example Separation Number 3 - Bauxite

Bauxite slurry was dewatered and dried under varying conditions using the Pneumapress® Model M1.3-316 filter. The objectives were to filter the slurry to desired moistures, identify and optimize additives that enhance dewatering/drying performance of the slurry, and determine production rates and utility use under varying conditions.

Table 5 below shows the effects of preheating the filtration chamber with steam, every 4^{th} filtration cycle, under the process conditions shown. Additionally, 100 psi, 200° C blowdown air was utilized in each example in the Table. The data show up to about 14% lower cake moisture with the use of steam preheat.

**Table 5**

| Steam Quantity (lbs/ft²of filter area) | Steam duration (sec.) | Cake Moisture (%) |
|---|---|---|
| 0 | 0 | 13.9 |
| 0.05 | 12 | 11.2 |
| 0.09 | 15 | 10.9 |
| 0.24 | 20 | 9.9 |

### Example Separation Number 4 - Metal Phosphate

Dewatering and drying metal phosphate slurry was conducted in laboratory testing. The metal phosphate slurry was from a fertilizer manufacturer. The tests demonstrate the efficiency of using the steam air combination protocol of the present invention to produce a filter cake with high cake solids content accompanied by a minimum of equipment and operating costs.

A lab filter comprising a Pneumapress® test cylinder (as described above)was set up and connected to a sources of compressed gas and steam. Slurry was poured into a funnel entry at the top of the lab unit, and the filtrate was collected in beakers.

The filtration cycle comprised: (1) pouring slurry, at a temperature of about 50° C, into filter chamber; (2) dewatering the. slurry using different methods such as compressed gas pressure or mechanical expression to form a filter cake; and (3) drying the filter cake using compressed gas. The prior art method 1 utilized conventional compressed air, which was cooled upon exiting from the compressor, as the source of pressure, and as a drying source, with a single compressor discharge step. The prior art method 2 utilized conventional compressed air, at about 100 psi, which was cooled upon exiting from the compressor, as the source of as a drying source, but relied upon 225 psi mechanical expression for the initial application of pressure to the slurry. The process of the present invention utilized applications of uncooled, direct compressor air (about 100 psi at 140° Cas clearing gas, and 80 psi steam as conditioning fluid.

Results are shown in Table 6 below:

| TABLE 6 | | | |
|---|---|---|---|
| Dewatering-Drying Method | Cycle Time (minutes) | Cake Solids % | Production Rates Kg(dry)/M² of filter area/hr. |
| Prior Art Method 1: compressed air | 2.0 | 39% | 254 |
| Prior Art Method 2: mechanical expression and compressed Air | 7.5 | 39% | 73.2 |
| Process Example 5 of the present invention (Air/Steam/Air) | 1.25 to 4.25 | 41% to 51% | 120 to 298 |

The test results show that the use of efficient applications of hot air, steam and combinations, optimized for slurry conditions, can significantly enhance cake solids production, with the result that high cake solids percentages were produced, accompanied by high production rates, hence reducing equipment requirements, and thus cost, for the application. Process example 5 of the present invention illustrates short cycle times, at highest cake dryness and tons of solids produced, thus provided the lowest energy use per ton of dry product.

### Example Separation 4 - Diatomaceous Earth

The Pneumapress® Model 1.3 pilot filter that was used in Example separations 1 and 3 was used in this test. The filtration cycle comprised the steps of (1) closing the filter plates to form the filter chamber; (2) pumping the slurry into the filter chamber; (3) separating the slurry using air and/or steam to form a filter cake; (4) drying the filter cake using air and/or steam; and (5) discharging the dry filter cake. Compressed air, sourced directly from the compressor without cooling was used at 100-120 psi, and 150-182° C. Steam was applied to the slurry at 80 psi, and 160° C.

Two slurrys were measured: 4% solids and 6% solids. To accurately measure compressed air and steam flow, a Rosemont mass type flow meter was installed on the filter. The Rosemont flow meter utilizes an orifice for flow measurement and incorporates both pressure and temperature compensation for accuracy.

A cost/ton comparison was made for the use of air ony to separate/dry, steam only and air plus steam. The energy cost of these for air only taken to a dryness of about 62% solids, was about $13/ton. Steam only yielded a cake of about 63% solids, but at a cost of about $23/ton. The use of the methods of the present invention, combining efficient use of steam and air, resulted in a 64% solids cake, at an energy cost of only about $9/ton.

As previously mentioned, direct compressed air, steam, or a combination of compressed air and steam may be used to effectively dewater the slurry and dry the resultant filter cake.

## Claims

1. A method of separating a quantity of slurry (43) into solids and liquids, the method comprising:
(a) introducing a quantity of a slurry, comprising solids and liquids, in at least one filtration chamber (40);
(b) extracting an initial portion of said liquids from the slurry within the filtration chamber whereby a cake is formed, by applying a pressure differential thereto, the applied pressure resulting in a first pressure within the filtration chamber;
(c) extracting a subsequent portion of said slurry liquids from the filtration chamber by introducing to the filtration chamber a quantity of a first treatment gas at an elevated temperature, an elevated pressure, or a combination thereof and wherein said elevated temperature of the first treatment gas is obtained by compressing the first treatment gas in a compressor means having an intercooler (78), aftercooler (79) or combination thereof, wherein all or part of a heat of compression is retained by the first treatment gas with bypassing said aftercooler or intercooler, or both,
(d) controlling the elevated temperature of said first treatment gas by using a bypass pipe (80) to bypass in part said first treatment gas in said compressor means from said aftercooler and mix said bypassed first treatment gas with cooled compressed first treatment gas from said aftercooler to obtain a desired temperature and pressure for said introduced first treatment gas; whereby the method is energy efficient by retaining said all or part of said heat of compression with bypassing said intercooler, aftercooler or combination thereof.

2. The method of claim 1 wherein said pressure differential applied to the slurry (43) in step (b) is supplied by (i) a slurry fill pressure; (ii) a fluid pressure; (iii) mechanical expression ; and (iv) combinations thereof.

3. The method of claim 1 where the filtration chamber (40) is preheated, to a temperature between about 30°C and about 250°C, prior to or concurrently with the introduction of slurry (43).

4. The method of claim 3 wherein the filtration chamber (40) is configured to allow at least two filtration cycles to occur before heat is again applied to the chamber.

5. The method of claim 1 wherein the chamber temperature and pressure conditions are between about 1,200 and 65,000 as measured by the formula T(°C) x P (psi).

6. The method of claim 1 wherein said first treatment gas is introduced directly to the filtration chamber from said compressor means, wherein said first treatment gas is compressed and heated thereby.

7. The method of claim 6 wherein said first treatment gas is controlled to cool by about 5 to 90 percent, based upon an output temperature from the compressor means, prior to introduction into the filtration chamber (40).

8. The method of claim 1 wherein said first treatment gas is introduced at a pressure of between about 15 and 250 psi, followed by a pressure drop of about 5 to 90 percent of the introduction pressure.

9. The method of claim 8 wherein the pressure drop comprises at least a 25-50% decrease after about 5-90 seconds or after a gas flow velocity through the filter cake increases by about 25-50%.

10. The method of claim 1 wherein at least one microprocessor is used to control at least one condition within the filtration chamber.

11. The method of claim 1 and further including the step of treating the cake formed in step (b) with superheated steam.

12. The method of claim 11 wherein the cake is treated by introducing the steam into the chamber at a pressure and temperature just above a saturation point thereof.

13. The method of claim 12 wherein said pressure and temperature of the steam is regulated by a valve means (62) at a steam outlet of the chamber (40).

14. The method of claim 1 wherein the filtration chamber (40) comprises at least a first and a second continuous mating surface, movable relative to each other between an open and a closed position and defining a volume open area filtration chamber when said mating surfaces are in said closed position, the filtration chamber further having a filtration medium (41) disposed therein.

## Patentansprüche

1. Verfahren zum Trennen einer Menge einer Aufschlämmung (43) in Feststoffe und Flüssigkeiten, wobei das Verfahren umfasst:
a) Einführen einer Menge einer Aufschlämmung, die Feststoffe und Flüssigkeiten enthält, in wenigstens eine Filtrationskammer (40);
b) Extrahieren eines anfänglichen Teils der Flüssigkeiten aus der Aufschlämmung in der Filtrationskammer, wodurch ein Kuchen gebildet wird, indem eine Druckdifferenz darauf angelegt wird, wobei der angelegte Druck einen ersten Druck in der Filtrationskammer erzeugt;
c) Extrahieren eines nachfolgenden Teils der Aufschlämmungsflüssigkeiten aus der Filtrationskammer durch Einführen einer Menge eines ersten Behandlungsgases in die Filtrationskammer bei erhöhter Temperatur, erhöhtem Druck oder einer Kombination daraus, und wobei die erhöhte Temperatur des ersten Behandlungsgases erhalten wird, indem das erste Behandlungsgas in einem Kompressormittel komprimiert wird, das einen Zwischenkühler (78), einen Nachkühler (79) oder eine Kombination daraus aufweist, wobei die gesamte Kompressionswärme oder ein Teil davon von dem ersten Behandlungsgas unter Umgehung des Nachkühlers oder des Zwischenkühlers oder beider gespeichert wird,
d) Steuern der erhöhten Temperatur des ersten Behandlungsgases durch Verwenden eines Bypass-Rohrs (80), um das erste Behandlungsgas in dem Kompressormittel teilweise um den Nachkühler herumzuleiten und das umgeleitete erste Behandlungsgas mit dem gekühlten, komprimierten ersten Behandlungsgas aus dem Nachkühler zu mischen, um eine gewünschte Temperatur und einen gewünschten Druck für das eingeführte erste Behandlungsgas zu erzielen; wobei
das Verfahren energieeffizient ist, indem die gesamte oder ein Teil der Kompressionswärme unter Umgehung des Zwischenkühlers, Nachkühlers oder einer Kombination daraus gespeichert wird.

2. Verfahren nach Anspruch 1, wobei die in Schritt b) auf die Aufschlämmung (43) angelegte Druckdifferenz durch (i) einen Aufschlämmungsfülldruck; (ii) einen Fluiddruck; (iii) mechanische Expression; und (iv) Kombinationen daraus erzeugt wird.

3. Verfahren nach Anspruch 1, wobei die Filtrationskammer (40) vor Einführung der Aufschlämmung (43) oder gleichzeitig damit auf eine Temperatur zwischen ungefähr 30°C und ungefähr 250°C vorgeheizt wird.

4. Verfahren nach Anspruch 3, wobei die Filtrationskammer (40) dafür konfiguriert ist, das Durchlaufen von wenigstens zwei Filtrationszyklen zuzulassen, bevor die Kammer wieder erwärmt wird.

5. Verfahren nach Anspruch 1, wobei die Kammertemperatur und die Druckbedingungen zwischen 1.200 und 65.000 liegen, gemessen durch die Formel T(°C) x P (psi).

6. Verfahren nach Anspruch 1, wobei das erste Behandlungsgas direkt aus dem Kompressormittel in die Filtrationskammer eingeführt wird, wobei das erste Behandlungsgas komprimiert und dadurch erwärmt wird.

7. Verfahren nach Anspruch 6, bei dem das erste Behandlungsgas so gesteuert wird, dass es auf der Grundlage einer Ausgangstemperatur von dem Kompressionsmittel vor der Einführung in die Filtrationskammer (40) um ungefähr 5 bis 90 Prozent abkühlt.

8. Verfahren nach Anspruch 1, wobei das erste Behandlungsgas bei einem Druck zwischen ungefähr 15 und 250 psi eingeführt wird, gefolgt von einem Druckabfall von ungefähr 5 bis 90 Prozent des Einführungsdrucks.

9. Verfahren nach Anspruch 8, wobei der Druckabfall nach ungefähr 5-90 Sekunden, oder nachdem eine Gasströmungsgeschwindigkeit durch den Filterkuchen um ungefähr 25-50% erhöht wurde, wenigstens eine Verringerung um 25-50% umfasst.

10. Verfahren nach Anspruch 1, wobei wenigstens ein Mikroprozessor verwendet wird, um wenigstens einen Zustand in der Filtrationskammer zu steuern.

11. Verfahren nach Anspruch 1, das weiterhin den Schritt des Behandelns des in Schritt b) gebildeten Kuchens mit überhitztem Dampf umfasst.

12. Verfahren nach Anspruch 11, wobei der Kuchen behandelt wird, indem der Dampf bei einem Druck und einer Temperatur knapp über seinem Sättigungspunkt in die Kammer eingeführt wird.

13. Verfahren nach Anspruch 12, wobei der Druck und die Temperatur des Dampfs durch ein Ventilmittel (62) an einem Dampfauslass der Kammer (40) reguliert werden.

14. Verfahren nach Anspruch 1, wobei die Filtrationskammer (40) wenigstens eine erste und eine zweite durchgehende, aneinanderpassende Oberfläche umfasst, die bezüglich einander zwischen einer Offen- und einer Geschlossen-Stellung bewegbar sind und eine Volumen-Filtrationskammer mit offenem Bereich bilden, wenn die aneinanderpassenden Oberflächen in der Geschlossen-Stellung sind, wobei die Filtrationskammer weiterhin ein darin angeordnetes Filtrationsmedium (41) aufweist.

## Revendications

1. Procédé de séparation d'une quantité de boue (43) en matières solides et en matières liquides, le procédé comprenant :
a) l'introduction d'une quantité d'une boue, comprenant des matières solides et des matières liquides, dans au moins une chambre de filtration (40) ;
b) l'extraction d'une partie initiale desdites matières liquides de la boue située à l'intérieur de la chambre de filtration moyennant quoi un gâteau est formé, par application d'un différentiel de pression à celle-ci, la pression appliquée résultant en une première pression à l'intérieur de la chambre de filtration ;
c) l'extraction d'une partie suivante desdites matières liquides de la boue de la chambre de filtration par introduction dans la chambre de filtration d'une quantité d'un premier gaz de traitement à une température élevée, une pression élevée ou une combinaison des deux et où ladite température élevée du premier gaz de traitement est obtenue par compression du premier gaz de traitement dans un moyen formant compresseur doté d'un refroidisseur intermédiaire (78), d'un refroidisseur final (79) ou d'une combinaison des deux, la totalité ou une partie d'une chaleur de compression étant retenue par le premier gaz de traitement qui contourne ledit refroidisseur intermédiaire ou ledit refroidisseur final, ou les deux,
d) la régulation de la température élevée dudit premier gaz de traitement au moyen d'un tuyau de dérivation (80) servant à faire dériver en partie ledit premier gaz de traitement dans ledit moyen formant compresseur dudit refroidisseur final et à mélanger ledit premier gaz de traitement dérivé avec un premier gaz de traitement comprimé et refroidi issu dudit refroidisseur final pour obtenir une température et une pression souhaitées pour ledit premier gaz de traitement introduit ;
moyennant quoi
le procédé fait preuve d'efficacité énergétique en retenant ladite totalité ou partie de ladite chaleur de compression par contournement dudit refroidisseur intermédiaire, dudit refroidisseur final ou d'une combinaison des deux.

2. Procédé selon la revendication 1 dans lequel
ledit différentiel de pression appliqué à la boue (43) à l'étape b) est fourni par i) une pression de remplissage de la boue ; ii) une pression de fluide ; iii) l'expression mécanique ; et iv) leurs combinaisons.

3. Procédé selon la revendication 1 où la chambre de filtration (40) est préchauffée, à une température comprise entre environ 30°C et environ 250°C, avant l'introduction de la boue (43) ou simultanément.

4. Procédé selon la revendication 3 dans lequel la chambre de filtration (40) est configurée de manière à laisser se dérouler au moins deux cycles de filtration avant toute nouvelle application de chaleur à la chambre.

5. Procédé selon la revendication 1 dans lequel les conditions de température et de pression de la chambre sont entre environ 1 200 et 65 000 telles que mesurées par la formule T(°C) x P(psi).

6. Procédé selon la revendication 1 dans lequel ledit premier gaz de traitement est introduit directement dans la chambre de filtration à partir dudit moyen formant compresseur, ledit premier gaz de traitement étant comprimé et chauffé lors de cette opération.

7. Procédé selon la revendication 6 dans lequel ledit premier gaz de traitement est commandé pour refroidir d'environ 5 à 90 %, en fonction d'une température de sortie du moyen formant compresseur, avant d'être introduit dans la chambre de filtration (40).

8. Procédé selon la revendication 1 dans lequel ledit premier gaz de traitement est introduit à une pression comprise entre environ 15 et 250 psi, et il s'ensuit une chute de pression d'environ 5 à 90 % de la pression d'introduction.

9. Procédé selon la revendication 8 dans lequel la chute de pression comprend une diminution d'au moins 25 à 50 % au bout d'environ 5 à 90 secondes ou après une augmentation d'environ 25 à 50 % de la vitesse d'écoulement du gaz à travers le gâteau de filtration.

10. Procédé selon la revendication 1 dans lequel au moins un microprocesseur est utilisé pour commander au moins une condition à l'intérieur de la chambre de filtration.

11. Procédé selon la revendication 1 et comprenant en outre l'étape de traitement du gâteau formé à l'étape b) avec de la vapeur surchauffée.

12. Procédé selon la revendication 11 dans lequel le gâteau est traité par introduction de la vapeur dans la chambre à une pression et une température tout juste supérieures à celles de son point de saturation.

13. Procédé selon la revendication 12 dans lequel ladite pression et ladite température de la vapeur sont régulées par un moyen formant soupape (62) situé sur un orifice de sortie de vapeur de la chambre (40).

14. Procédé selon la revendication 1 dans lequel la chambre de filtration (40) comprend au moins une première et une seconde surface de contact continues, mobiles l'une par rapport à l'autre entre une position ouverte et une position fermée et délimitant une chambre de filtration à zone ouverte de volume lorsque lesdites surfaces de contact sont dans ladite position fermée, la chambre de filtration comportant en outre un milieu de filtration (41) placé dans celle-ci.
